# EUROPÄISCHE PATENTANMELDUNG

(11) **EP 3 597 376 A1**
(43) Veröffentlichungstag der Anmeldung: **22.01.2020**
(21) Anmeldenummer: 18183927.5
(22) Anmeldetag: 17.07.2018
(51) Int. Cl.: B25J 15/02, B25J 19/02, B25J 13/08

(54) **GREIFSYSTEM**

(71) Anmelder: Baumer Electric AG, 8500 Frauenfeld (CH)
(72) Erfinder: Bauer, Sven, 8280 Kreuzlingen (CH)
(74) Vertreter: Strauss, Steffen

(57) **Zusammenfassung**

Die Erfindung betrifft ein Greifsystem mit einem ersten Greiferfinger und einem zweiten Greiferfinger. Das Greifsystem ist dazu eingerichtet, ein Werkstück im Zusammenspiel des ersten Greiferfingers mit dem zweiten Greiferfinger zu greifen. Hierbei weist der erste Greiferfinger einen Spalt mit einer Spaltbreite auf. Die Spaltbreite ist von einer auf den ersten Greiferfinger wirkenden Greifkraft des Parallelgreifers beim Greifen des Werkstücks abhängig. An dem ersten Greiferfinger ist ein Abstandssensor angeordnet, der dazu eingerichtet ist, die Spaltbreite zu erfassen, um die Greifkraft des Greifsystems zu bestimmen. Die Erfindung betrifft des Weiteren eine Sensoranordnung.

## Beschreibung

Die Erfindung betrifft ein Greifsystem mit zwei oder mehreren Fingern und eine Sensoranordnung zum Erfassen einer Greifkraft eines Greifsystems, bei welchem es sich um einen Parallelgreifer und/oder um ein Greifsystem mit mehreren Greiferfingern handeln kann.

Greifsysteme mit mehr als einem Greiferfinger, beispielsweise Parallelgreifer, werden verwendet, um Werkstücke automatisiert bzw. unter kontrollierten Bedingungen zu handhaben. Beispielsweise können Greifsysteme mit mehr als einem Greiferfinger in der Medizintechnik eingesetzt werden, um Gegenstände automatisiert in einer sterilen Umgebung zu bewegen. Die Greifsysteme haben weitreichende Anwendungsmöglichkeiten in vielen Industriezweigen, insbesondere bei der Montage und Handhabung von Werkstücken.

Bei einem Greifsystem mit zwei oder mehreren Greiferfingern fassen diese ein Werkstück um, indem sie aufeinander zu bewegt werden. Der Greifvorgang kann sowohl durch Kraftals auch durch Formschluss erfolgen. Das Greifsystem kann dann bewegt werden, um das Werkstück zu handhaben.

Hierbei kann es von Bedeutung sein, mit welcher Kraft, insbesondere mit welcher Greifkraft, das Greifsystem das Werkstück greift. Die Greifkräfte können bei bekannten Greifsystemen mit Dehnungsmessstreifen oder bei elektrisch getriebenen Greifsystemen über eine Messung der Stromaufnahme bzw. des Drehmoments eines Greifantriebes erfolgen. Werden Dehnungsmessstreifen verwendet, so können diese so appliziert werden, dass sie bei Auftreten einer Kraft die Verformung in Form von Dehnung oder Stauchung erfassen. Zur Signalauswertung wird ein externer Messverstärker benötigt. Der Dehnungsmessstreifen kann sich hierbei an dem Greiferfinger oder einer an dem Greiferfinger befestigten Greiferbacke befinden oder in der Greiferbacke integriert werden.

Es ist eine Aufgabe der Erfindung, ein verbessertes Konzept zum Erfassen einer Greifkraft eines Greifsystem mit Greiferfingern aufzuzeigen.

Die Erfindung beruht auf der Erkenntnis, dass mittels eines Abstandssensors eine elastische Verformung an einer Greiferfingerstruktur gemessen werden kann, wodurch sich die Greifkraft bestimmen lässt. Hierzu kann der Greiferfinger durch einen Spalt geschlitzt sein, und die Spaltbreite kann mit dem Abstandssensor gemessen werden, um die Greifkraft indirekt zu ermitteln. Durch das Einbringen des Spaltes erfolgt eine Separierung des Fingers in einen stärkeren und einen schwächeren Querschnitt. Letzterer bildet hierdurch einen Biegeträger, dessen Veränderung unter Krafteinfluss durch den erwähnten, die Distanz messenden Sensor erfasst werden kann.

Die Aufgabe wird gemäß einem ersten Aspekt durch ein Greifsystem mit einem ersten Greiferfinger und einem zweiten Greiferfinger gelöst. Das Greifsystem ist dazu eingerichtet, ein Werkstück im Zusammenspiel des ersten Greiferfingers mit dem zweiten Greiferfinger zu greifen. Der erste Greiferfinger weist hierbei einen Spalt mit einer Spaltbreite auf, wobei die Spaltbreite von einer auf den ersten Greiferfinger wirkenden Greifkraft des Greifsystems beim Greifen des Werkstücks abhängig ist. An dem ersten Greiferfinger ist ein Abstandssensor angeordnet, der dazu eingerichtet ist, die Spaltbreite zu erfassen, um die Greifkraft des Greifsystems zu bestimmen.

Der erste Greiferfinger kann aus einem Metallwerkstoff, insbesondere aus Aluminium gefertigt sein. Der Spalt kann in den ersten Greiferfinger eingefräst sein. Der Spalt kann hierbei parallel zu einer Haupterstreckungsrichtung des ersten Greiferfingers bzw. des zweiten Greiferfingers verlaufen. Insbesondere verläuft der Spalt im Wesentlichen senkrecht zu einer Bewegungsrichtung, die der erste Greiferfinger beim Greifen des Werkstücks durchläuft.

Zum Greifen des Werkstücks kann sich der erste Greiferfinger auf den zweiten Greiferfinger zubewegen und der zweite Greiferfinger auf den ersten Greiferfinger zubewegen. Der erste Greiferfinger kann ein aktiver Greiferfinger sein, der mit einem Antrieb des Greifsystems in direkter Verbindung steht, d.h. mechanisch verbunden ist. Der zweite Greiferfinger kann ein passiver Greiferfinger sein, der mit dem Antrieb indirekt über den ersten Greiferfinger mechanisch verbunden ist. Beide Greiferfinger können synchron oder asynchron angetrieben werden und sich gleichzeitig aufeinander zubewegt werden.

Der Spalt kann den ersten Greiferfinger über eine gesamte Tiefe des ersten Greiferfingers durchlaufen. Hierbei wird der erste Greiferfinger in zwei miteinander verbundene Teile getrennt. Der dem Werkstück zugewandte Teil kann hierbei funktional als Biegeträger angesehen werden. Wird das Werkstück durch den ersten Greiferfinger und den zweiten Greiferfinger gefasst, so wird eine Kraft auf das Werkstück durch den ersten Greiferfinger und den zweiten Greiferfinger aufgebracht. Dementsprechend entsteht eine Gegenkraft von dem Werkstück auf den ersten Greiferfinger und entsprechend auf den zweiten Greiferfinger. Diese Kraft drückt den Biegeträger, d. h. den Teil des ersten Greiferfingers, der zwischen dem Werkstück und dem Spalt liegt, in Richtung des anderen Teils des ersten Greiferfingers. Hierbei wird die Spaltbreite des Spaltes verringert. Die Verringerung kann durch den Abstandssensor detektiert werden. Die Verringerung der Spaltbreite des Spalts ist abhängig von der Kraft, die auf den ersten Greiferfinger wirkt. D. h., die Verringerung der Spaltbreite des Spalts ist abhängig von der Kraft, die von dem Parallelgreifer über den ersten Greiferfinger und den zweiten Greiferfinger auf das Werkstück gebracht wird. Somit lässt sich die Greifkraft des Parallelgreifers über die Messung der Verringerung der Spaltbreite des Spalts indirekt erfassen.

Der Spalt kann hierbei eine Breite von beispielsweise einem Millimeter aufweisen. Die Länge des Spalts, die den Spalt in Haupterstreckungsrichtung des ersten Greiferfingers aufweist, kann so angepasst sein, dass bei den üblichen auftretenden Greifkräften des Parallelgreifers eine Auslenkung des Biegeträgerteils des ersten Greiferfingers von dem Abstandssensor messbar ist. Beispielsweise können Greiferfinger von kleinen Parallelgreifern ca. drei Zentimeter lang sein. Größere Greiferfinger von größeren Parallelgreifern können zwischen ca. 120 mm bis 150 mm lang sein. Ebenso sind auch andere Greiferfingerlängen möglich. Dies kann sich an eine Anwendung anpassen. Der Spalt ist hierbei jeweils an die Länge des Greiferfingers angepasst. Insbesondere ist der Teil des Greiferfingers angepasst, der als Biegeträger dient. Eine Anpassung des Biegeträgers kann eine Dicke und/oder Länge umfassen. Der Abstandssensor kann in den ersten Greiferfinger integriert sein.

Eine Verbiegung des Greiferfingerteils des ersten Greiferfingers, der dem Werkstück zugewandt ist, das gegriffen wird, kann beispielsweise im Bereich zwischen 0,1 und 0,5 mm liegen, an einem freien Ende des Greiferfingers. Die Verformung ist daher gering und hat keinen wesentlichen Einfluss auf das Greifverhalten.

Ein Vorteil eines solchen Parallelgreifers ist es, dass die Greifkraft ohne großen zusätzlichen Aufwand gemessen werden kann. Auch kann das Messverfahren im Verhältnis zu anderen Bestimmungsmethoden für die Greifkraft genauer sein. Des Weiteren können an den Greiferfinger unterschiedliche Greiferbacken montiert werden bzw. die Greiferfingerenden können an das Werkstück angepasst sein, ohne die Messfunktionalität für die Greifkraft des Parallelgreifers zu beeinflussen. Die vorgeschlagene Lösung zum Erfassen der Greifkraft des Parallelgreifers ist darüber hinaus auch kostengünstig und einfach zu realisieren.

In einer Ausgestaltung umfasst der erste Greiferfinger eine dem zweiten Greiferfinger abgewandte Außenseite und eine dem zweiten Greiferfinger zugewandte Innenseite. Der Spalt verläuft im Wesentlichen parallel zu der Außenseite und der Innenseite in dem ersten Greiferfinger, so dass der erste Greiferfinger einen U-förmigen Querschnitt aufweist.

In diesem Zusammenhang heißt "im Wesentlichen parallel", dass der Spalt unter Berücksichtigung von üblichen Fertigungstoleranzen parallel zu der Außenseite bzw. der Innenseite verläuft. Dies gilt für den Fall, dass die Innenseite bzw. Außenseite des Greiferfingers zueinander parallel verlaufen. Der Spalt kann senkrecht zu einer Greifbewegung, die von dem ersten Greiferfinger und dem zweiten Greiferfinger ausgeführt wird, verlaufen. Der Spalt kann in einer Ebene so erstreckt sein, dass eine Normale der Ebene in die Richtung weist, in die sich der erste Greiferfinger beim Greifen des Werkstücks bewegt, d.h. die Normale der Ebene, in der der Spalt liegt, kann in Richtung der Greifbewegung verlaufen.

Der erste Greiferfinger weist einen U-förmigen Querschnitt auf, der durch einen ersten Greiferfingerteil, eine Greiferfingerschulter und einen zweiten Greiferfingerteil gebildet wird. Der erste Greiferfingerteil und der zweite Greiferfingerteil stellen hierbei jeweils die Schenkel des U-förmigen Querschnitts dar. Insbesondere wird der dem Werkstück näher liegende Schenkel beim Greifen in Richtung des anderen Schenkels gedrückt. Der Abstandssensor kann die Änderung der Spaltbreite erfassen, das heißt, den Abstand der Schenkel zueinander, insbesondere an einem freien Ende der Schenkel, da dort die Verformung am größten ist.

In einer Ausgestaltung ist der erste Greiferfinger mehrstückig, wobei ein Teil des ersten Greiferfingers, der von dem Spalt mit der Innenseite des ersten Greiferfingers gebildet wird, an einer Greiferfingerschulter des ersten Greiferfinger festgelegt ist. Alternativ ist der erste Greiferfinger einstückig.

Der erste Greiferfinger kann mit einer Greiferfingerschulter an einem Grundkörper des Parallelgreifers festgelegt sein. Von der Greiferfingerschulter können ein erster Greiferfingerteil und ein zweiter Greiferfingerteil des ersten Greiferfingers von dem Grundkörper des Parallelgreifers wegragen. Der erste Greiferfingerteil des ersten Greiferfingers kann von dem Spalt und der Außenseite des ersten Greiferfingers begrenzt werden. Der zweite Greiferfingerteil des ersten Greiferfingers kann von dem Spalt und der Innenseite des ersten Greiferfingers begrenzt werden. Der zweite Greiferfingerteil des ersten Greiferfingers kann als separates Teil ausgeführt sein, das durch eine Schraubverbindung oder eine Klebverbindung mit der Greiferfingerschulter des ersten Greiferfingers verbunden ist. Der zweite Greiferfingerteil des ersten Greiferfingers kann an der Greiferfingerschulter mit dem ersten Greiferfingerteil des ersten Greiferfingers bzw. mit der Greiferfingerschulter starr verbunden sein. Das heißt, das Gelenk an der Greiferfingerschulter unterscheidet sich mechanisch gesehen in Bezug auf Biegefestigkeit nicht bzw. nur unwesentlich im Rahmen üblicher Toleranzen von einem einstückigen Greiferfinger. Die Greiferfingerschulter, d.h. das Lager kann hierbei starr sein, sodass lediglich die Biegesteifigkeit des zweiten Greiferfingerteils zur Veränderung der Spaltbreite beiträgt.

Ist der erste Greiferfinger einstückig, können der erste Greiferfingerteil und der zweite Greiferfingerteil sowie die Greiferfingerschulter des ersten Greiferfingers aus einem Werkstück hergestellt sein. Der Spalt kann hierbei gefräst sein. Der Abstandssensor kann in eine eingefräste Öffnung eingebracht sein.

In einer Ausgestaltung ist der Abstandssensor ein induktiver Sensor, insbesondere ein induktiver Distanzsensor. Ein induktiver Sensor kann eine geringe Baugröße aufweisen, die zum Einsatz in kleinen mechanischen Teilen geeignet ist. Des Weiteren kann mit einem induktiven Sensor eine geringe Größenänderung bzw. Abstandsänderung erfasst werden. Alternativ hierzu kann ein anderer Abstandssensor vorgesehen werden, wie beispielsweise ein optischer Sensor oder ein Ultraschallsensor.

In einer Ausgestaltung weist eine dem Abstandssensor gegenüberliegende Oberfläche des ersten Greiferfingers eine Beschichtung auf. Die Beschichtung ist dazu ausgebildet, eine Reflexion eines Messsignals zu verbessern.

Beispielsweise weist Aluminium eine Dämpfung des Sensorsignals von 50 % auf. Dieser Dämpfungswert kann durch eine Beschichtung gesenkt werden.

Eine Beschichtung kann eine Reflexion eines Messsignals verbessern und so den Messbereich vergrößern. Die Beschichtung kann eine metallische Beschichtung sein, um eine Reflexion eines Feldes des induktiven Sensors zu verbessern. Die Beschichtung kann auch als Platte ausgestaltet sein, die insbesondere aufgeklebt ist.

In einer Ausgestaltung weist die dem Abstandssensor gegenüberliegende Oberfläche des ersten Greiferfingers einen Tauchanker auf, der dazu eingerichtet ist, bei einer Verringerung der Spaltbreite in eine Spule des Abstandssensors einzugreifen.

Weist der erste Greiferfinger einen Tauchanker auf, so handelt es sich bei dem Abstandssensor um einen induktiven Sensor. Eine Messung der Spaltbreite kann verbessert werden, wenn ein Messsignal des Abstandssensors verstärkt wird. Ein Tauchanker kann in die Spule eingreifen und so eine größere Wirkung erzielen, als das bloße Einbringen eines Hindernisses in ein Feld des induktiven Sensors außerhalb der Spule. Daher kann ein Tauchanker das Messsignal verstärken.

In einer Ausgestaltung ist ein Verhalten des Abstandssensors linearisiert.

Hierbei kann die Kraftanzeige proportional zu dem Sensorsignal des Abstandssensors sein, das heißt das Signal des Abstandssensors ist direkt proportional zum gemessenen Abstand und somit, in Abhängigkeit der Materialeigenschaft des Biegeträgers, proportional zur Greifkraft des Parallelgreifers. Hierbei kann eine proportionale Verbiegung des als Biegeträger ausgestalteten Teils des ersten Greiferfingers angenommen werden. Somit entfällt eine komplizierte Umrechnung.

In einer Ausgestaltung ist der Spalt von einem isolierenden, elastischen Material gefüllt. Durch die Füllung des Spalts kann der durch den Spalt entstehende Hohlraum abgedichtet werden. Somit sind beispielsweise Anwendungen innerhalb einer Flüssigkeit oder aber auch ein Schutz gegen Staub oder andere Gefahrstoffe möglich. Das isolierende Material kann eine Feldänderung eines induktiven Sensors so wenig beeinflussen, dass weiterhin eine Abstandsmessung möglich ist. Des Weiteren verringert sich hierdurch eine mögliche Störkontur des Greiferfingers.

In einer Ausgestaltung ist der Parallelgreifer pneumatisch oder elektrisch betreibbar.

Der Parallelgreifer kann einen Antrieb umfassen. Der Antrieb kann einen aktiven Greiferfinger, insbesondere den ersten Greiferfinger, antreiben, der mit dem zweiten Greiferfinger, gekoppelt ist, der somit von dem Antrieb passiv betrieben wird. Der Antrieb kann pneumatisch sein, d.h. durch Druck geregelt werden. Der Parallelgreifer kann ebenso einen elektrischen Antrieb umfassen.

Gemäß einem zweiten Aspekt wird die Aufgabe durch eine Sensoranordnung zum Erfassen einer Greifkraft eines Parallelgreifers gelöst. Der Parallelgreifer weist einen ersten Greiferfinger und einen zweiten Greiferfinger auf und ist dazu eingerichtet, ein Werkstück im Zusammenspiel des ersten Greiferfingers mit dem zweiten Greiferfinger zu greifen. Der erste Greiferfinger weist einen Spalt mit einer Spaltbreite auf, wobei die Spaltbreite von einer auf den ersten Greiferfinger wirkenden Greifkraft des Parallelgreifers abhängig ist. Die Sensoranordnung umfasst einen Abstandssensor, der an dem ersten Greiferfinger angeordnet ist und dazu eingerichtet ist, die Spaltbreite zu erfassen. Die Sensoranordnung weist des Weiteren einen Prozessor auf, der dazu eingerichtet ist, basierend auf der von dem Abstandssensor erfassten Spaltbreite die Greifkraft des Parallelgreifers bereitzustellen.

Eine derartige Sensoranordnung kann bei verschiedenen Parallelgreifern zum Einsatz kommen. Sie kann die Greifkraft des Parallelgreifers durch den Abstandssensor in einem Greiferfinger erfassen. Zusätzlich können die Greiferfinger mit benutzerspezifischen Greiferbacken ausgestattet werden, ohne dass dies einen Einfluss auf die Kraftmessung hat.

Ausführungsbeispiele der Erfindung sind in den Zeichnungen dargestellt und werden im Folgenden näher beschrieben.
- Fig. 1: eine schematische Darstellung eines Greifsystems in der Ausführung eines Parallelgreifers gemäß einem Ausführungsbeispiel;
- Fig. 2a: eine schematische Darstellung eines Greiferfingers des Parallelgreifers gemäß des Ausführungsbeispiels;
- Fig. 2b: eine weitere schematische Darstellung des Greiferfingers des Parallelgreifers gemäß des Ausführungsbeispiels; und
- Fig. 3: eine Darstellung eines Sensorsignalverlaufs einer Sensoranordnung gemäß einem Ausführungsbeispiel.

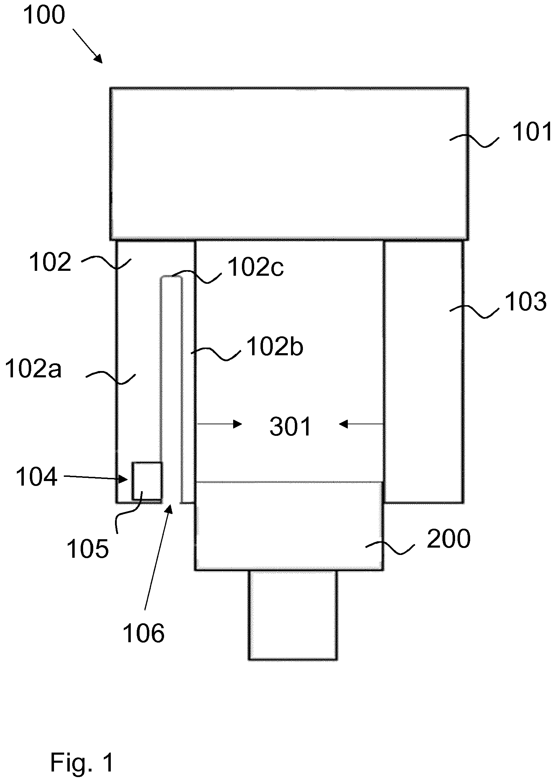

Fig. 1 zeigt eine schematische Darstellung eines Greifsystems mit zwei oder mehreren Fingern am Beispiel eines Parallelgreifers 100 gemäß einem Ausführungsbeispiel. Der Parallelgreifer 100 umfasst einen Grundkörper 101, einen ersten Greiferfinger 102 und einen zweiten Greiferfinger 103. Der Grundkörper 101 des Parallelgreifers 100 umfasst einen Antrieb und Mechaniken des Parallelgreifers 100, die jedoch in den Figuren aus Gründen der Übersichtlichkeit nicht dargestellt sind. Der Antrieb des Parallelgreifers 100 ist ein pneumatischer Antrieb. In einem weiteren Ausführungsbeispiel ist der Antrieb des Parallelgreifers 100 elektrisch.

Der erste Greiferfinger 102 und der zweite Greiferfinger 103 sind mechanisch mit dem Antrieb des Parallelgreifers 100 gekoppelt. Der erste Greiferfinger 102 ist hierbei direkt mit dem Antrieb des Parallelgreifers 100 gekoppelt und stellt somit einen aktiven Greiferfinger dar. Der zweite Greiferfinger 103 ist mittels einer Übersetzung über den ersten Greiferfinger 102 mit dem Antrieb des Parallelgreifers 100 gekoppelt und stellt somit einen passiven Greiferfinger dar. In einem weiteren Ausführungsbeispiel ist der erste Greiferfinger 102 passiv und der zweite Greiferfinger 103 aktiv. In einem weiteren Ausführungsbeispiel werden beide Greiferfinger 102, 103 aktiv betätigt.

Der Parallelgreifer 100 ist dazu eingerichtet, durch Bewegen des ersten Greiferfingers 102 und des zweiten Greiferfingers 103 zueinander ein Werkstück zu greifen. Das gegriffene Werkstück 200 kann dann durch Bewegen des Parallelgreifers 100 gehandhabt werden.

Beim Greifen übt der Parallelgreifer eine Greifkraft 301 auf das Werkstück 200 aus. Die Greifkraft 301 wird von dem ersten Greiferfinger 102 und dem zweite Greiferfinger 103 beim Greifen auf das Werkstück 200 ausgeübt.

Die Greifkraft 301, die der Parallelgreifer 100 auf das Werkstück 200 ausübt, kann variieren, je nachdem wie fest die Greiferfinger 102, 103 auf das Werkstück 200 gepresst werden. Je nach Werkstück 200 kann es von Bedeutung sein, dass eine bestimmte Greifkraft nicht überschritten wird. Beispielsweise ist das Werkstück 200 unelastisch verformbar und könnte beschädigt werden, wenn die Greifkraft 301 zu groß ist.

Um die Greifkraft 301 zu messen, weist der erste Greiferfinger 102 eine Sensoranordnung 104 auf. Die Sensoranordnung 104 umfasst einen Abstandssensor 105. Im beschriebenen Ausführungsbeispiel handelt es sich bei dem Abstandssensor 105 um einen induktiven Sensor, der eine Veränderung eines durch eine Spule hervorgerufenen elektromagnetischen Felds erfasst. Der erste Greiferfinger 102 weist des Weiteren einen Spalt 106 auf. Der Spalt 106 verläuft im Wesentlichen senkrecht zu einer Bewegungsrichtung, die der erste Greiferfinger 102 beim Greifen des Werkstücks 200 durchläuft. D.h., der Spalt 106 verläuft im Wesentlichen parallel zu einer Haupterstreckungsrichtung des ersten Greiferfingers 102.

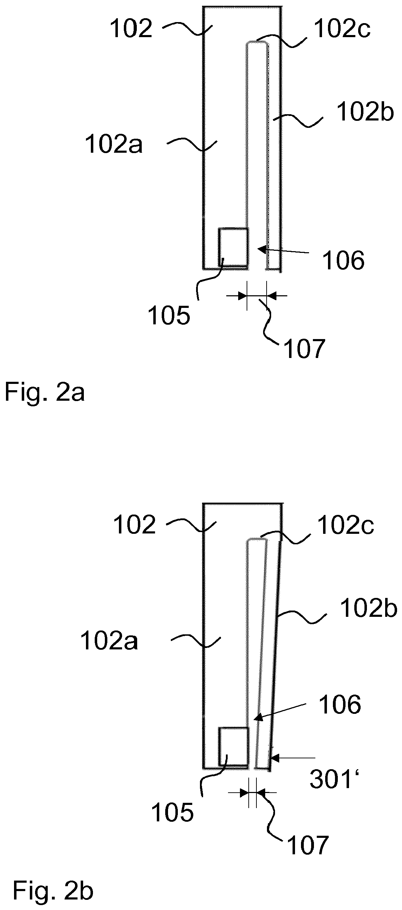

Die Sensoranordnung 104 wird im Folgenden anhand der Fig. 2a und 2b detailliert beschrieben.

Fig. 2a zeigt eine schematische Darstellung des ersten Greiferfingers 102. An dem ersten Greiferfinger 102 ist der Abstandssensor 105 angeordnet. Der erste Greiferfinger 102 weist den Spalt 106 auf. Der Spalt 106 weist eine Spaltbreite 107 auf. Wirkt keine Greifkraft 301 gegen den ersten Greiferfinger 102, so ist die Spaltbreite 107 über die Länge des Spalts 106 konstant. Wirkt die Greifkraft 301, so wird der erste Greiferfinger 102 verformt, sodass die Spaltbreite 107 verringert wird. Hierbei wird die Spaltbreite 107 an einer offenen Seite mehr verändert, als an einer geschlossenen Seite des Spalts 106.

Der Abstandssensor 105 ist so an dem ersten Greiferfinger 102 angeordnet, dass durch den Abstandssensor 105 die Spaltbreite 107 des Spalts 106 erfasst werden kann.

Der erste Greiferfinger 102 weist einen ersten Greiferfingerteil 102a und einen zweiten Greiferfingerteil 102b auf. Der erste Greiferfingerteil 102a wird von dem zweiten Greiferfingerteil 102b durch den Spalt 106 beabstandet. Hierbei liegen in einem Ruhezustand, d.h. ohne eine Einwirkung einer Kraft in Greifbewegungsrichtung auf den ersten Greiferfinger 102, der erste Greiferfingerteil 102a und der zweite Greiferfingerteil 102b maximal auseinander, das hießt, die Spaltbreite 107 weist einen maximalen Wert auf. Hierbei ist die Spaltbreite 107 über die Länge des Spalts 106 konstant. In einem alternativen Ausführungsbeispiel variiert die Spaltbreite 107 über die Länge des Spalts 106, sodass die den Spalt 106 bildenden Oberflächen des ersten Greiferfingerteils 102a und des zweiten Greiferfingerteils 102b nicht parallel verlaufen.

Der erste Greiferfinger 102 weist eine Greiferfingerschulter 102c auf. Die Greiferfingerschulter 102c verbindet den ersten Greiferfingerteil 102a und den zweiten Greiferfingerteil 102b.

Im beschriebenen Ausführungsbeispiel wird der erste Greiferfinger 102 von dem Spalt 106 geteilt, sodass der erste Greiferfingerteil 102a und der zweite Greiferfingerteil 102b lediglich über die Greiferfingerschulter 102c miteinander verbunden sind. In einem alternativen Ausführungsbeispiel sind der erste Greiferfingerteil 102a und der zweite Greiferfingerteil 102b an wenigstens einer weiteren Seite des Spalts 106 miteinander verbunden, sodass der Spalt 106 lochartig in den ersten Greiferfinger 102 hineinragt.

Der zweite Greiferfingerteil 102b bildet von der Greiferfingerschulter 102c ausgehend einen Biegeträger. Der zweite Greiferfingerteil 102b wird beim Greifen eines Werkstücks 200, wie in Fig. 2b dargestellt, mit einer Kraft 301' beaufschlagt. Die Kraft 301' entspricht betragsmäßig der Greifkraft 301, mit der der erste Greiferfinger 102 auf das Werkstück 200 drückt.

Die Kraft 301' drückt gegen den zweiten Greiferfingerteil 102b. Da dieser als Biegeträger ausgebildet ist, wird der zweite Greiferfingerteil 102b in Richtung des ersten Greiferfingerteils 102a verbogen. Da der zweite Greiferfingerteil 102b an der Greiferfingerschulter 102c mit dem ersten Greiferfingerteil 102a starr verbunden ist, wird ein freies Ende des zweiten Greiferfingerteils 102b weiter bewegt als ein der Greiferfingerschulter 102c nahes Greiferfingerteil des zweiten Greiferfingerteils 102b. Das freie Ende des zweiten Greiferfingerteils 102b liegt der Greiferfingerschulter 102c gegenüber. An diesem freien Ende misst der Abstandssensor 105 die Spaltbreite 107. Der Abstandssensor 105 ist hierbei im Bereich des freien Endes angeordnet. In weiteren Ausgestaltungen kann der Abstandssensor 105 an einer anderen Stelle angeordnet sein und die Spaltbreite 107 des Spalts 106 entsprechend messen. Misst der Abstandssensor 105 beispielsweise die Spaltbreite 107 an eine Stelle, die der Greiferfingerschulter 102c näher liegt, als bei einer Messung im Bereich des freien Endes, so ist die gemessene Änderung der Spaltbreite 107 bei einer Verformung durch die Kraft 301' geringer als an dem freien Ende. Jedoch kann der Abstandssensor 105 besser gegen Umwelteinflüsse geschützt sein, wenn dieser einen größeren Abstand zu dem freien Ende aufweist.

In den beschriebenen Ausführungsbeispielen ist der Spalt 106 vom freien Ende bis zu der Greiferfingerschulter 102c mehrere Zentimeter lang. Die Spaltbreite 107 beträgt 1 mm. Diese Abmessungen können in weiteren Ausführungsbeispielen variieren. Insbesondere können die Dimensionen des Spalts 106 so angepasst werden, dass abhängig von einer Materialeigenschaft des ersten Greiferfingers 102 und einer zu erwartenden maximalen Greifkraft 301 eine Verformung des zweiten Greiferfingerteils 102b so erfolgt, dass eine maximale Änderung der Spaltbreite 107 des Spalts 106 zwischen 1/10 mm und 5/10 mm liegt. In einem anderen Ausführungsbeispiel wird die Dimensionierung anders gewählt und an ein Sensorverhalten des Abstandssensors 105 angepasst, so dass der Abstandssensor 105 eindeutige und klare Signale erfassen und aussenden kann.

Im beschriebenen Ausführungsbeispiel ist der Abstandssensor 105 ein induktiver Sensor, der ein Gehäusemaß von ca. 4 x 5 x 15 mm aufweist. In weiteren Ausgestaltungen kann der Abstandssensor 105 ein anderer Sensor sein und/oder andere Gehäusemaße aufweisen. Der Abstandssensor 105 ist am Ende des ersten Greiferfingers 102 befestigt oder integriert. Hierbei kann der Abstandssensor 105 geschraubt oder geklebt sein. In einem weiteren Ausführungsbeispiel ist der Abstandssensor 105 auf andere Weise an dem ersten Greiferfinger 102 befestigt, beispielsweise mit Klemmen.

Der Abstandssensor 105 ist beispielsweise linearisiert und verfügt über eine integrierte nicht gezeigte Elektronik, welche ein verwertbares Signal als Strom- und/oder Spannungswert ausgibt. Somit wird es einfacher, das Ausgangssignal auf einen entsprechenden Kraftwert umzurechnen. Das Ausgangssignal des Abstandssensors 105 kann proportional zur Spannungsänderung eine relative Kraftänderung der Kraft 301', die auf den ersten Greiferfinger 102 wirkt, anzeigen. Das Ausgangssignal des Abstandssensors 105 stellt somit einen Wert bereit, der indirekt die Greifkraft 301 des Parallelgreifers 100 anzeigt.

Der zweite Greiferfingerteil 102b ist an der dem ersten Greiferfingerteil 102a zugewandten Seite beschichtet. Das heißt, der Spalt 106 weist auf der dem Abstandssensor 105 gegenüberliegenden Seite eine Beschichtung auf. Die Beschichtung ist so ausgestaltet, dass der Abstandssensor 105 ein im Vergleich zu einer unbeschichteten Oberfläche verbessertes Sensorsignal erfassen kann. Insbesondere ist die Oberfläche des Spalts 106 gegenüber des Abstandssensors 105 mit einem metallischen Material beschichtet. Dies kann beispielsweise ein Messsignal eines induktiven Sensors erhöhen. In einem weiteren Ausführungsbeispiel ist die Oberfläche in dem Spalt 106 nur teilweise oder gar nicht beschichtet. Des Weiteren kann die Beschichtung in verschiedenen Ausführungsbeispielen unterschiedlich sein und metallische, magnetische, ferromagnetische oder Materialien mit gemischten Eigenschaften umfassen. Eine metallische Beschichtung kann beispielsweise Kupfer, Gold, Eisen oder andere Metalle beinhalten.

In einem weiteren nicht dargestellten Ausführungsbeispiel, in dem der Abstandssensor 105 ein induktiver Sensor ist, weist die dem Abstandssensor 105 gegenüberliegende Oberfläche des Spalts 106 zusätzlich einen Tauchanker auf, der in einen Spalt einer Spule des induktiven Sensors eingreifen kann. Hierbei ist der Tauchanker so angeordnet, dass bei einer Verringerung der Spaltbreit 107 des Spalts 106 der Tauchanker weiter in die Spule eingreift, als in einer Ausgangssituation, in der keine Greifkraft 301 von dem ersten Greiferfinger 102 auf das Werkstück ausgeübt wird. Der Tauchanker ist entsprechend den oben beschriebenen möglichen Beschichtungen aus einem das Feld des induktiven Sensors beeinflussenden Material ausgeführt.

Der Abstandssensor 105 ist im beschriebenen Ausführungsbeispiel über eine Kabelverbindung (aus Gründen der Übersichtlichkeit in den Figuren nicht gezeigt), die durch oder an dem ersten Greiferfinger 102 entlang geführt ist, an der ein analoges Sensorsignal des Abstandssensors 105, insbesondere ein 0-10V / 0-20mA Signal, abgegriffen und gegebenenfalls angezeigt werden kann mit einem Prozessor verbunden. In einer weiteren Ausgestaltung ist der Abstandssensor 105 über eine digitale Schnittstelle verbunden, insbesondere einen IO-Link, und/oder drahtlos mit dem Prozessor verbunden.

Der Prozessor ist Teil der Sensoranordnung 104 und mit dem Abstandssensor 105 verbunden. Der Prozessor ist hierbei eingerichtet, das Sensorsignal des Abstandssensors 105 aufzubereiten und bereitzustellen, insbesondere auf einer Ausgabeeinrichtung auszugeben, wie beispielsweise einem Display.

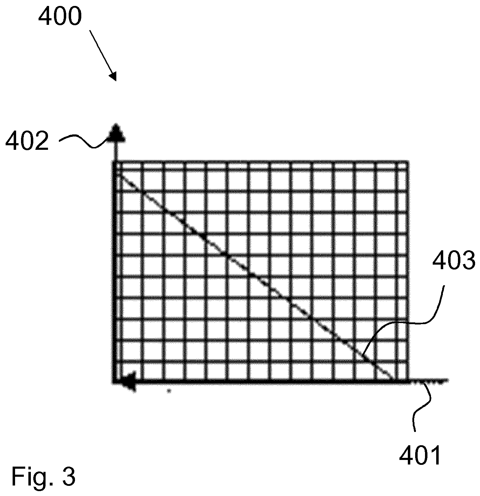

Fig. 3 zeigt einen Signalverlauf 400 des Abstandssensors 105 gemäß dem beschriebenen Ausführungsbeispiel für eine Verformung des zweiten Greiferfingerteils 102b. Auf der Abszissenachse 401 ist der Abstand s in [mm] aufgetragen, auf der Ordinatenachse 402 das Spannungssignal des Abstandssensors in Volt [V]. Der Abstand s entspricht hierbei einer Änderung der Spaltbreite 107 des Spalts 106 auf Höhe des Abstandssensors 105.

Ein Sensorsignal 403 ist in dem Graphen dargestellt. Der Graph stellt die Änderung des Spannungssignals über den Abstand des zweiten Greiferfingerteils 102b vom ersten Greiferfingerteil 102a dar. Hierbei sind eine hohe Verformung mit einem hohen Spannungswert und eine niedrige Verformung mit einem niedrigen Spannungswert verbunden. Der Abstandssensor 105 ist linear ausgestaltet. Dies ist am Graphen zu sehen, dessen Kurve eine Gerade darstellt, die proportional zur Verformung des Biegeträgers, d.h. des zweiten Greiferfingerteils 102b verläuft und somit auch proportional zu der Greifkraft 301 des Parallelgreifers. Eine Umwandlung des Messsignals des Abstandssensors 105 zu dem dargestellten Signalverlauf bzw. der Signalverlaufdarstellung wird von dem Prozessor der Sensoranordnung 104 durchgeführt.

In einem weiteren Ausführungsbeispiel (nicht dargestellt) ist in den Spalt 106 des ersten Greiferfingers 102 ein isolierendes Material eingebracht, das den Spalt 106 verschließt. Hierbei ist das isolierende Material so ausgestaltet, dass im Verhältnis der beim Greifen wirkenden Greifkräfte 301 und einer Rückstellkraft des zweiten Greiferfingerteils 102b aufgrund der elastischen Verformung des Greiferfingermaterials eine durch das isolierende Material bedingte zu vernachlässigende Federkraft auftritt. Durch das eingebrachte isolierende Material in dem Spalt 106 wird der Spalt 106 nach außen hin verschlossen. Hierdurch können zum einen keine Flüssigkeiten oder Gase in den Spalt 106 eindringen. Des Weiteren können sich Materialien, insbesondere Textilien, nicht in dem Spalt 106 verfangen, was eine Arbeitssicherheit weiter erhöhen kann.

In einem weiteren nicht dargestellten Ausführungsbeispiel ist der zweite Greiferfingerteil 102b als separates Teil an die Greiferfingerschulter 102c angebracht. Beispielsweise ist das zweite Greiferfingerteil 102b durch eine Schraubverbindung an der Greiferfingerschulter 102c angebracht. Somit ist der erste Greiferfinger 102 mehrstückig ausgestaltet. Die mechanische Verbindung der mehreren Teile ist so ausgelegt, dass der zweite Greiferfingerteil 102b, also der Biegeträger, so starr an der Greiferfingerschulter 102c befestigt ist, dass die mechanische Verbindung der mehreren Teile des ersten Greiferfingers 102 im Vergleich zu einem einstückigen ersten Greiferfinger 102 keinen Einfluss auf das Sensorsignal des Abstandssensors 105 hat. Hierbei ist der Ausdruck "kein Einfluss" im Rahmen üblicher Toleranzen und in der Praxis zu vernachlässigenden Schwankungen zu verstehen.

## Patentansprüche

1. Greifsystem (100) mit einem ersten Greiferfinger (102) und einem zweiten Greiferfinger (103), wobei das Greifsystem (100) dazu eingerichtet ist, ein Werkstück (200) im Zusammenspiel des ersten Greiferfingers (102) mit dem zweiten Greiferfinger (103) zu greifen,
wobei der erste Greiferfinger (102) einen Spalt (106) mit einer Spaltbreite (107) aufweist, wobei die Spaltbreiten (107) von einer auf den ersten Greiferfinger (102) wirkenden Greifkräfte (301) des Greifsystems (100) beim Greifen des Werkstücks abhängig sind,
wobei an dem ersten Greiferfinger (102) ein Abstandssensor (105) angeordnet ist, der dazu eingerichtet ist, die Spaltbreite (107) zu erfassen, um die Greifkraft (301) des Greifsystems (100) zu bestimmen.

2. Greifsystem (100) nach Anspruch 1, wobei der erste Greiferfinger (102) eine dem zweiten Greiferfinger (103) abgewandte Außenseite und eine dem zweiten Greiferfinger (103) zugewandte Innenseite umfasst, wobei der Spalt (106) im Wesentlichen parallel zu der Außenseite und der Innenseite in dem ersten Greiferfinger (102) verläuft, sodass der erste Greiferfinger (102) einen U-förmigen Querschnitt aufweist.

3. Greifsystem (100) nach Anspruch 2, wobei der erste Greiferfinger (102) einstückig ist.

4. Greifsystem (100) nach Anspruch 2, wobei der erste Greiferfinger (102) mehrstückig ist, wobei ein Teil des ersten Greiferfingers (102), der von dem Spalt (106) und der Innenseite des ersten Greiferfingers (102) gebildet wird an einer Greiferfingerschulter (102c) des ersten Greiferfingers (102) festgelegt ist.

5. Greifsystem (100) nach einem der vorhergehenden Ansprüche, wobei der Abstandssensor (105) ein induktiver Sensor ist.

6. Greifsystem (100) nach einem der Ansprüche 1 bis 4, wobei der Abstandssensor (105) ein optischer Sensor oder ein Ultraschallsensor ist.

7. Greifsystem (100) nach einem der vorhergehenden Ansprüche, wobei eine dem Abstandssensor (105) gegenüberliegende Oberfläche des ersten Greiferfingers (102) eine Beschichtung aufweist, die dazu ausgebildet ist, eine Reflexion eines Messsignals zu verbessern.

8. Greifsystem (100) nach einem der Ansprüche 1 bis 5, wobei eine dem Abstandssensor (105) gegenüberliegende Oberfläche des ersten Greiferfingers (102) einen Tauchanker aufweist, der dazu eingerichtet ist, bei einer Verringerung der Spaltbreite (104) in eine Spule des Abstandssensors (105) einzugreifen.

9. Greifsystem (100) nach einem der vorhergehenden Ansprüche, wobei ein Verhalten des Abstandssensors (105) linearisiert ist.

10. Greifsystem (100) nach einem der vorhergehenden Ansprüche, wobei der Spalt (106) von einem isolierenden Material gefüllt ist.

11. Greifsystem (100) nach einem der vorhergehenden Ansprüche, wobei das Greifsystem (100) pneumatisch oder elektrisch betreibbar ist.

12. Sensoranordnung (104) zum Erfassen einer Greifkraft (301) eines Greifsystems (100), wobei das Greifsystem (100) einen ersten Greiferfinger (102) und einen zweiten Greiferfinger (103) aufweist und dazu eingerichtet ist, ein Werkstück (200) im Zusammenspiel des ersten Greiferfingers (102) mit dem zweiten Greiferfinger (103) zu greifen, wobei der erste Greiferfinger (102) einen Spalt (106) mit einer Spaltbreite (107) aufweist, wobei die Spaltbreite (107) von einer auf den ersten Greiferfinger (102) wirkenden Greifkraft (301) des Greifsystems (100) abhängig ist, umfassend:
einen Abstandssensor (105), der an dem ersten Greiferfinger (102) angeordnet ist und dazu eingerichtet ist, die Spaltbreite (107) zu erfassen; und
einen Prozessor, der dazu eingerichtet ist, basierend auf der von dem Abstandssensor (105) erfassten Spaltbreite (107) die Greifkraft (301) des Greifsystems (100) bereitzustellen.

13. Sensoranordnung (104) zum Erfassen einer Greifkraft (301) eines Greifsystems (100) nach Anspruch 12, wobei der Abstandssensor (105) ein induktiver Sensor ist.

14. Sensoranordnung (104) zum Erfassen einer Greifkraft (301) eines Greifsystems (100) nach Anspruch 12, wobei der Abstandssensor (105) ein optischer Sensor oder ein Ultraschallsensor ist.

15. Sensoranordnung (104) zum Erfassen einer Greifkraft (301) eines Greifsystems (100) nach einem der Ansprüche 12 bis 14, wobei ein Verhalten des Abstandssensors (105) linearisiert ist.
